(19) **Europäisches Patentamt**

**European Patent Office**

**Office européen des brevets**

(11) **EP 1 063 616 A2**

(12) **EUROPEAN PATENT APPLICATION**

(43) Date of publication:
**27.12.2000 Bulletin 2000/52**

(51) Int. Cl.[7]: **G06T 15/10**

(21) Application number: **00304592.9**

(22) Date of filing: **31.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **25.06.1999 JP 17977399**

(71) Applicant: **Hudson Soft Co., Ltd.**
**Sapporo-shi, Hokkaido (JP)**

(72) Inventor:
**Miura, Takashi**
**c/o Hudson Soft Co., Ltd**
**Sapporo-shi, Hokkaido (JP)**

(74) Representative: **Haley, Stephen**
**Gill Jennings & Every,**
**Broadgate House,**
**7 Eldon Street**
**London EC2M 7LH (GB)**

(54) **Computer image processing method and apparatus therefor**

(57)    In a method of expressing a blurring effect by operating a maximum frequency involved in image data of sampling frequency, a problem that first pixel becomes too dark when a cut-off coefficient k is small value and a problem occurring by unnatural blurring processing on the boundaries of pixels in which the k value abruptly changes are solved. The filtering processing is carried out after memory value of filter is set so that output value of the filter can be same as pixel value of input pixel data, where first pixel of each line is processed. And, the memory value of filter is set so that target output $y_t$ processed by filter parameter $A_2$ becomes $(y_1 + y_2)/2$, in which y1 is output to filter parameter $A_1$ before blurring processing and $y_2$ is output to filter parameter $A_2$ after the blur processing, where k value between pixels highly changes and unnatural condition possibly occurs.

## Description

The present invention relates to a computer image processing method and apparatus therefor, and more particularly, relates to a method and apparatus for producing computer images having blur in accordance with perspective information by processing image data having the perspective information with digital low-pass filtering.

When landscape is carefully observed, it is often recognized that near view is clear in details but far view is blurred in outlines and in details. Such recognition is memorized as natural images in human and therefore, images produced by computer graphics techniques are recognized as unnatural images because they are clear regardless of distance. However, it has long been desired in printing fields, computer software fields or the other fields that production costs and time are reduced by combining clear images separately produced as digital data with each other and adding natural perspective (far and near) sense to them.

A blurring is known as a way for expressing the perspective sense. As the method of expressing it by computer, there are dispersive ray-tracing methods in which computation or calculation is carried out by applying physical formulation to each pixel virtually. The dispersive ray-tracing methods require more time for calculation because calculation on a plural of rays has to be done to form blurred images of one pixel.

Instead of the dispersive ray-tracing methods that much calculation is required, methods for expressing a blur easier than the ray-tracing methods are proposed, for example, in Japanese Patent Application Laid-Open Nos. 12608/89, 109898/90, 193811/92 and 36025/94. According to the methods disclosed in these publications, perspective sense is expressed by calculating a diameter of blur per pixel in accordance with depth information of each pixel to seek blurring area of the pixel spread to a neighborhood of the pixel.

The perspective sense is achieved by using a mask register of 3 x 3 and adding a blur to images in consideration with the influence of surrounding pixels in Japanese Patent Application Laid-Open Nos. 12608/89 and 109898/90. The perspective sense is achieved by using a mask register of 5 x 5 and adding a blur to images in consideration with the influence of surrounding pixels in Japanese Patent Application Laid-Open Nos. 193811/92 and 36025/94.

The following problems are in Japanese Patent Application Laid-Open Nos.12608/89 and 109898/90.

a) Only effect of one external pixel to the remarked pixel is realized.
b) Heavy calculation burden is required because multiplication and addition of nine pixels by the mask register for processing of one pixel have to be done.
c) It is difficult that near view information is converted into weight coefficient of suitable mask register.
d) It is supposed that sense of human view is affected by approximately ten pixels adjacent to the pixel, where distance is very far. In order to sufficiently express the situation, the mask register has to be expanded to 21 x 21 and therefore, multiplication and addition of 441 pixels are required by the mask register for processing of one pixel. That is impractical calculation burden. In addition, it is supposed that design of the mask register will be impractical. For the reason, practical application of the methods should be limited in the expression of natural perspective sense.

On the other hand, the following problems are in Japanese Patent Application Laid-Open Nos. 193811/92 and 36025/94.

a) Only effect of two external pixels to the remarked pixel is realized.
b) Heavy calculation burden is required because multiplication and addition of 25 pixels by the kernel for processing of one pixel have to be done.
c) Heavy calculation burden is required because 25 of weight coefficient of the kernel are calculated per object.
d) The weight coefficient other than center of the kernel is calculated by the formula;

$$fwi,j = \{(1 - fw_{33})/(5x5 - 1)\}x\ dfi,j$$

The above formula can be rewritten by the formula;

$$fwi,j = (df_{33} \times dfi,j)/(5x5 - 1)\}$$

This formula is physically unclear because it shows multiplication of distance by distance. For the reason, naked eye evaluation is necessary after filtration in order to adjust a degree of blurring and then it must be decided whether the filter processing is repeated. The calculation burden is increased by repeating the processing.

The inventors have proposed a method for solving the above problems in Japanese Patent Application Laid-Open No. 74258/98. According to the method, blurring is carried out by cut-off coefficient k. In the method, $f_d/f_m$, in

which $f_d$ is a cut-off frequency of low-pass filter and $f_m$ is maximum frequency involved in image data is introduced as the cut-off coefficient k. The maximum frequency $f_m$ is a half of sampling frequency ($f_s/2$). It is the feature in the method that a transfer function such as Butter worth filter, Chebyshev filter, Reverse Chebyshev filter or ellipse function filter is converted to a transfer function which is not affected by the sampling frequency $f_s$. Because inverse number of k is the coefficient showing the number of dots after filtering processing (blurring processing) of one dot, the blurring processing can be automatically done in the physically understandable form.

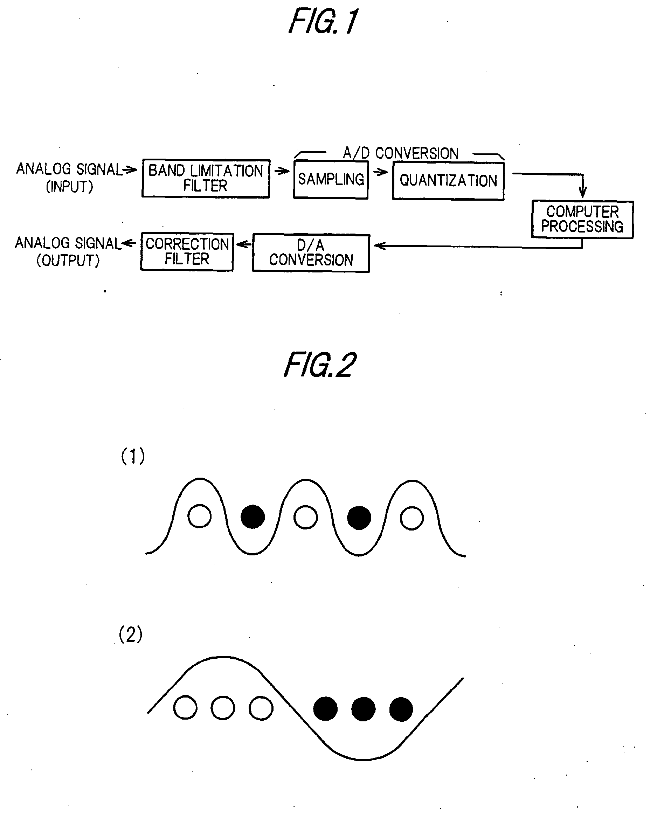

An image data used in a computer is digital data. Any information in the natural world is continuous data, i.e. analog data. Accordingly, the analog data is converted through an A/D (analog to digital) converter into digital data, which is processed by a computer. On the other hand, digital data is converted through a D/A (digital to analog) converter into analog data to be displayed in a display device such as television. Fig. 1 is a flow chart for schematic explanation of converting analog images into digital images (A/D conversion) and, after computer processing, converting the digital images into the analog images for image output (D/A conversion).

A sampling is to convert an input signal with a pulse signal generated at certain cycle to a discrete signal in time direction, and a quantization is to convert them to a discrete signal in amplitude direction. A sampling signal y(t) is represented by the formula;

$$y(t) = \Sigma \; x \, (t) \; \delta \, (t\text{-}nT)$$

wherein T is a certain cycle, $\Sigma$ is total amount where time t is from $-\infty$ to $+\infty$, x(t) is analog data of input signal and $\delta$ is a delta function, i.e. a particular function, which is

$$\delta \, (t - nT) = 1 \; (\text{when } t = nT) \text{ or } \delta \, (t - nT) = 0 (\text{when } t \neq nT)$$

In case where signal x (t) is a limited band-range signal of bandwidth W (radian/sec.),

$$T = 2\pi/W$$

$$f = W/2\pi$$

in which f is a maximum frequency.

Images on a television or computer display are displayed by a set of dots. Fig. 2 is a drawing for schematic explanation showing relationship of the analog signal and the dots. Fig. 2 (1) shows dot arrangements of light and dark in order, in which analog signal of images to be input has a wave of short cycle and Fig. 2(2) shows dot arrangements of light, light, light and dark, dark, dark, in which the analog signal has a wave of long cycle.

In case where human recognize small object, they only recognize it as one block if it is smaller than certain limits. Eventually, minimum size of recognizable object can be seen by minimum value of angle between human eyes and outline of the object. The size of object recognizable to the minimum value of angle is different in the case where it is near or far. This means that human recognize a whole wide area as a small point when they look at far view.

In Fig. 2, the frequency in (1) is three times as much as the frequency in (2). It is understood that if the maximum frequency component changes, the number of dots on images showing minimum size of the object to be recognized by human eyes changes.

An image data used in computers is a block of image data obtained based on certain sampling frequency. According to the sampling theorem, the maximum frequency component $f_m$ contained in the image data is a half of the sampling frequency $f_s$. In the condition, a size of the object recognizable by human eyes is one dot in the displayed images.

If it is assumed that the maximum frequency component contained in image data changes to a half (fm/2), the size of minimum object recognizable by human eyes changes to two dots in the expressed images. In case where original images are used as far images, perspective effects are attained if the size of recognizable minimum object changes not to a unit of one dot but to a unit of one and half or two dots. A distance recognizable by a unit of two dots is required for comparatively far view, and such distance that ten dots are recognizable as eight to nine dots is required for usual view.

When the cut-off frequency of low-pass filter is $f_d$, $f_d$ is $kf_m$ (0<k<1) and k is 1, image data processed by the low-pass filer has the maximum frequency component same as that of the original image data. This is same case, as a consequence, that the low-pass filtering process is not carried out. That is, the image data having a distance recognizable every one dot is displayed when k is 1.

It means that when k is 0.5, image data has a distance recognizable every two dots, and that when k is 0.8, image data has a distance in which ten dots are recognizable as eight dots.

That is, the number of dots corresponding to inverse number of k is recognized as one dot. Accordingly, image data having a blur in accordance with perspective sense can be produced by changing k to a value corresponding to a distance.

In this way, effects of blurring or out-of focus can be displayed by operating the maximum frequency contained in image data.

A method of expressing effects of blurring by operating the maximum frequency contained in image data is very useful, but it may provide inconvenient results in specific cases.

For example, in case where the "m"th degree of processing is done, memory of filter is cleared to be zero and then filter processing is carried out at "m" times or more to output initial pixel. In the case, if the value of cut-off coefficient k is 0.3 or smaller, the initial pixel in each line is dark.

Namely, as a degree of blurring is more increased, the initial pixel is darker. And, there is unnatural effect that boundaries between pixels of which k value highly changes become more uniformly sharp.

An object of the invention is to solve, in a method of expressing blurring effects, a problem that first pixel becomes too dark when a cut-off coefficient k is small value, and a problem occurring by unnatural blurring processing on the boundaries of pixels in which the k value more changes, by operating a maximum frequency contained in image data of sampling frequency.

The object of the invention can be achieved by a computer image processing method, a computer image processing apparatus and a computer recording medium, which comprises, where first pixel of each line is processed in a method for producing computer images having blur in accordance with perspective information by processing image data having the perspective information with digital low-pass filtering, setting memory value of filter so that output value of the filter can be same as pixel value of input pixel data, and then implementing the filtering processing.

The object of the invention can be achieved by a computer image processing method, a computer image processing apparatus and a computer recording medium, which comprises, where cut-off coefficient k between pixels highly changes and unnatural condition possibly occurs in such the degree that the boundaries of the pixels become much clear, setting memory value of filter so that target output $y_t$ processed by filter parameter $A_2$ becomes $(y_1+y_2)/2$, in which $y_1$ is output to filter parameter $A_1$ before blur processing and $y_2$ is output to filter parameter $A_2$ after the blur processing, whereby the boundaries become smooth.

In the accompanying drawings:-

Fig. 1 is a flow chart for schematic illustration of converting analog images into digital images (A/D conversion) and converting, after computer processing, the digital images into the analog image for image output (D/A conversion),

Fig. 2 is a drawing for schematic illustration showing relationship of the analog signal and dots,

Fig. 3 is an example of arrangement for first degree of digital filter processing in means to solve the objects of the invention,

Fig. 4 is an example of arrangement for second degree of digital filter processing in means to solve the objects of the invention,

Fig. 5 is a graph showing a spatial frequency characteristic of first degree of low-pass filter in means to solve the objects of the invention,

Fig. 6 is a graph showing a pattern of blurring which is obtained by distance Z and cut-off coefficient k in an embodiment of the invention,

Fig. 7 is a flow chart showing whole processing for adding perspective sense in an embodiment of the invention,

Fig. 8 is a flow chart showing filter processing in an embodiment of the invention, and

Fig. 9 is a flow chart showing filter processing in which processing for removing unnatural condition is added to the filter processing in Fig. 8, whereby the unnatural condition that the line in the boundaries of the pixels become much clear can be removed.

According to the invention, quantitative perspective setting can be optionally done by closely resembling digital filter with frequency characteristic in accordance with perspective information to characteristic of human eyesight.

Image data used in a computer may be collected by various sampling frequency, and information of the sampling frequency is not often obtained. However, this issue is not so serious, if the following formula is used. It is possible in the invention that the provided image data is converted from the image recognizable per one dot to the image recognizable per 1/k dots, regardless of the sampling frequency.

Butter worth filter will be explained as an example of digital low-pass filter as follows. The situation is not changed even if a degree of filter may be odd or even number and hence, it will be explained about even number. The transfer function of digital Butter worth filter is represented by Formula 1:

[Formula 1]

$$H_{2m}(\omega_d, z) = \prod_{p=0}^{m-1} \frac{C_{0p}(1+2z^{-1}+z^{-2})}{1+A_{1p}z^{-1}+A_{2p}z^{-2}} \qquad (1)$$

$$C_{0p} = \frac{Q_p(t_s\omega_{cp})^2}{4Q_p+2t_s\omega_{cp}+Q_p(t_s\omega_{cp})^2}$$

$$A_{1p} = \frac{2Q_p\{-4+(t_s\omega_{cp})^2\}}{4Q_p+2t_s\omega_{cp}+Q_k(t_s\omega_{cp})^2} \qquad (2)$$

$$A_{2p} = \frac{4Q_p-2t_s\omega_{cp}+Q_p(t_s\omega_{cp})^2}{4Q_p+2t_s\omega_{cp}+Q_p(t_s\omega_{cp})^2}$$

$$p_p = \cos\left(\frac{\pi(2p+1+2m)}{4m}\right) \quad (0 \le p < m)$$

$$\omega_{cp} = \omega_d \quad , \quad Q_p = -\frac{1}{2p_p} \qquad (3)$$

Transfer function of first degree's Butter worth low-pass filter

$$H_1(\omega_d, z) = \frac{C_0(1+z^{-1})}{1+A_1z^{-1}} \qquad (4)$$

$$C_0 = \frac{t_s\omega_d}{2+t_s\omega_d}, \quad A_1 = \frac{-2+t_s\omega_d}{2+t_s\omega_d}$$

In Formula 1, if the following formula is given,

$$f_d = kf_m \qquad (5)$$

$$\omega_d = 2\pi f_d \ , \ \omega_m = 2\pi f_m$$

$$\omega_d = k\omega_m = k\omega_s/2$$

$$t_s\omega cp = t_s\omega_d$$

which is contained in the coefficient of transfer function is shown by the formula,

$$t_s\omega cp = ts\omega_d$$
$$= ts\, k\omega_s / 2 = (1/f_s) \times (2\pi k f_s / 2)$$
$$= k\pi$$

(6)

The sampling frequency $f_s$ does not appears in the last expression of the formula (6). Accordingly, the transfer function is in no relation with the sampling frequency and is represented by only the ratio (k) of a half ($f_m$) of the sampling frequency and the cut-off frequency ($f_d$).

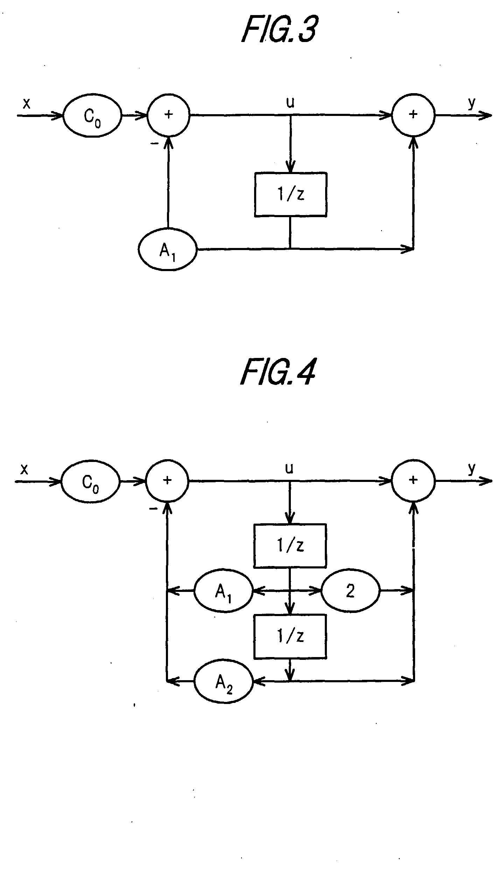

Since the method of the invention can be applied regardless of the degree of the filter, the first degree of the filter will be explained as an example. The first degree of digital low-pass filter shown by the formula in Formula 1 is the filter for data processing shown by Fig. 3, and the second degree of digital low-pass filter is one for data processing shown by Fig. 4. The "n"th (="2m"th) degree of the digital low-pass filter is the filter for the data processing same as above "m" times.

The transfer function of low-pass filter includes Chebyshev filter, Reverse Chebyshev filter and ellipse function filter in addition to Butter worth filter shown by the formula 1. These are represented by the above parameter k and therefore, the invention will be explained by using the Butter worth filter as an example.

An example of coefficient of transfer function is shown where it is applied to the method of the invention. In the example, the cut-off frequency of analog filter is processed by prewarp in order to convert the analog filter to digital filter. The processing of the prewarp is shown by the following formula.

$$\omega_a = (2/t_s) \cdot \tan(\omega_d\, t_s/2)$$

(7)

This formula means that the digital filter of cut-off angle frequency $\omega_d$ is designed based on the analog filter of cut-off angle frequency $\omega_a$. If this processing is not carried out, transfer characteristic to be expected causes error as the frequency changes from low to $\omega_d$.

The above formula is converted with reference to Formula 1.

$$t_s\omega_{cp} = t_s\omega_d = t_s(2/t_s)\tan(\omega_d\, t_s/2)$$
$$= 2\tan(k\pi/2)$$

(8)

The examples of coefficients $C_{0p}$, $A_{1p}$, $A_{2p}$ of transfer function $H_{2m}(\omega_d, Z)$ are shown in Table 1.

[Table 1]

$$H_{2m}(\omega_d, z) = \prod_{p=0}^{m-1} \frac{C_{0p}(1+2z^{-1}+z^{-2})}{1+A_{1p}z^{-1}+A_{2p}z^{-2}}$$

Examples of the coefficient of the transfer function:

When the filter is second degree and k is 0.9,

$C_{0p} = 0.8006$, $A_{1p} = 1.561$, $A_{2p} = 0.6414$

When the filter is second degree and k is 0.8,

$C_{0p} = 0.6389$, $A_{1p} = 1.143$, $A_{2p} = 0.4128$

When the filter is second degree and k is 0.7,

$C_{0p} = 0.5050$, $A_{1p} = 0.7478$, $A_{2p} = 0.2722$

When the filter is second degree and k is 0.6,

$C_{0p} = 0.3931$, $A_{1p} = 0.3695$, $A_{2p} = 0.1958$

When the filter is second degree and k is 0.5,

$C_{0p} = 0.2929$, $A_{1p} = -0.13*10^{-5} \doteqdot 0$, $A_{2p} = 0.1716$

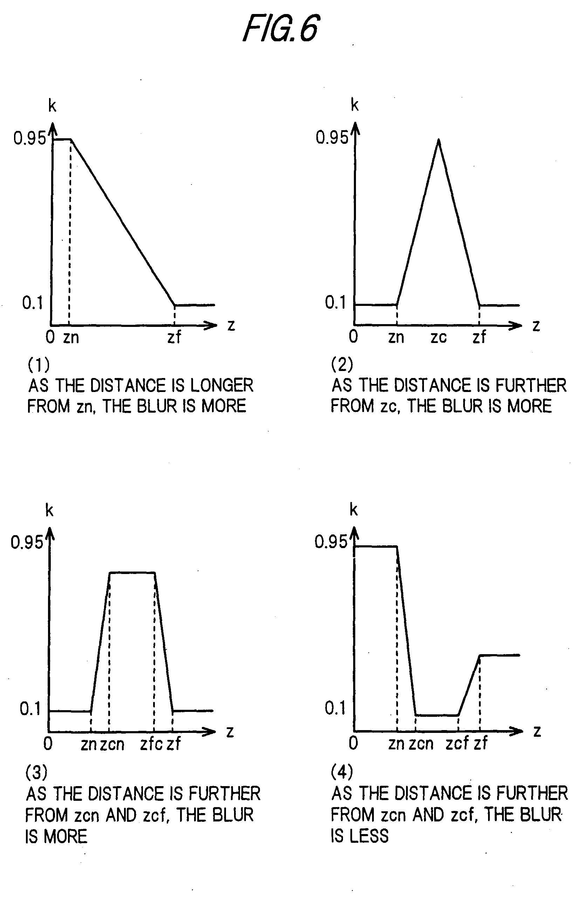

The transfer function depends on the cut-off coefficient k shown by Formula 2. As is shown in Fig. 6, a blur in accordance with perspective information can be expressed by connecting Z value with the cut-off coefficient k. The transfer function of first degree of filter is shown by Formula 2.

[Formula 2]

$$H(k,z)= \frac{\tan\left(\frac{k\pi}{2}\right)(1+z^{-1})}{\left\{1+\tan\left(\frac{k\pi}{2}\right)\right\}+\left\{\tan\left(\frac{k\pi}{2}\right)-1\right\}z^{-1}}$$

$$= \frac{\dfrac{\tan\left(\frac{k\pi}{2}\right)}{1+\tan\left(\frac{k\pi}{2}\right)}(1+z^{-1})}{1+\dfrac{\tan\left(\frac{k\pi}{2}\right)-1}{1+\tan\left(\frac{k\pi}{2}\right)}z^{-1}}$$

$$= \frac{A_0\cdot(1+z^{-1})}{1+(2A-1)\cdot z^{-1}} \quad = \frac{c_0(1+z^{-1})}{1+a_1 z^{-1}}$$

$$\therefore A = 1+\frac{\tan\left(\frac{k\pi}{2}\right)}{1+\tan\left(\frac{k\pi}{2}\right)}$$

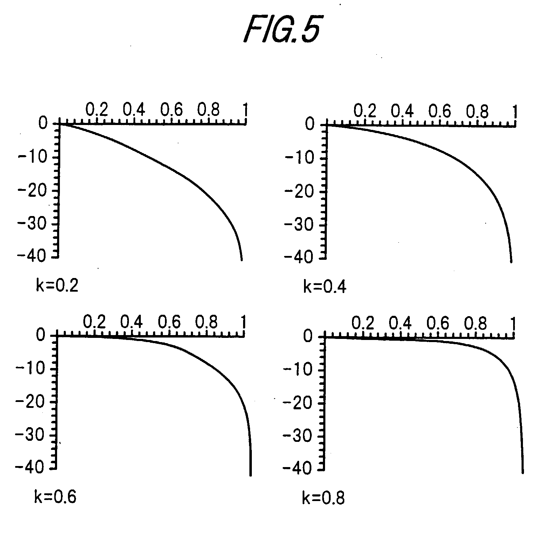

A spatial frequency characteristic of the first degree of low-pass filter represented by Formula 2 is shown in Fig. 5. The axis of ordinates (y axis) represents frequency f and one division in the axis of abscissas (x axis) represents the number of dots recognizable by one dot. As is apparent from Fig. 5, a blurring is emphasized all over as k value is smaller, and a focus is adjusted as k value is more.

In case where the above blurring processing is actually programmed, Z value representing a distance between pixels and cut-off coefficient k deciding a degree of blurring are calculated, filter parameter A is provided from the k value, and new pixel data r', g', b' is provided from each pixel data r, g, b, filter memory mR, mG, mB and the filter parameter A. That is, it can be provided by C programming language style as follows.

The cut-off coefficient k is calculated from the k value. The filter parameter A is searched from the k value and a table. The first pixel of each line is initialized. The image data r', g', b' after blurring processing can be calculated by the following processing.

$$B = - (2A - 1);$$

$$uR = A*r + B*mR;$$

$$r' = uR + mR;$$

$$mR = uR;$$

$$uG = A*g + B*mG;$$

$$g' = uG + mG;$$

$$mG = uG;$$

$$uB = A*b + B*mB;$$

$$b' = uG + mB;$$

$$mB = uB;$$

The calculation is carried out from left of image to right and from upper of image to lower per pixel. As is apparent from the above formula, each value of the filter memory mR, mG, mB in a pixel is used to calculate that of next pixel (referring to the formula of mR = uR ; mG = uG ; mB = uB ;).

In the case, the initial value of filter memory (filter memory value to first pixel of each line) is set to zero (0) to simplify the programming in conventional processing, whereby such problem that, when the k value is small, the first pixel in each line becomes dark occurs. In order to remove the problem, the filter memory is initialized in the invention so that the first pixel of each line becomes a value of input pixel data. The feature will be concretely explained by embodiments of the invention.

Where cut-off coefficient k between pixels highly changes, unnatural condition possibly occurs. In the case, memory value of filter is set so that target output $y_t$ processed by filter parameter $A_2$ becomes $(y_1 + Y_2)/2$, in which $y_1$ is output to filter parameter $A_1$ before blur processing and y2 is output to filter parameter $A_2$ after the blur processing. The boundaries become smooth by rewriting filter memory so that target outputs before blur processing and after the blur processing become the mean value. The feature will be concretely explained by embodiments of the invention.

Since the method of the invention can be applied regardless of the degree of the filter, the first degree of the filter will be explained as an example. The explanation is based on the expression of C programming language. The following items are prepared for pre-preparation. An image data consists of w+1 dots in horizontal direction and v+1 dots in vertical direction.

(1) Image data has w + 1 lines, each of which has the data of $d_0$, $d_1$, $d_2$, $d_3$, ----, $d_w$.
(2) Z value data representing a distance per pixel has v + 1 lines, each of which has the data of $Z_0$, $Z_1$, $Z_2$, $Z_3$, ----, $Z_w$.
(3) Each pixel data is input in a particular filter, which is decided by cut-off coefficient k corresponding to the pixel data, and data in which a blur is added is output. The particular filter is designated as filter parameter A, which corresponds to $A_{1p}$ and $A_{2p}$ in Formula 1. Embodiments will be explained later.
(4) The relationship of Z value and cut-off coefficient k is prepared in formula or table, in which the k value is decided by the value Z corresponding to the pattern of blurring to be expressed. For example, the pattern is shown in Fig. 6. In Fig. 6, the axis of abscissas (x axis) represents distance Z and the axis of ordinates (y axis) represents cut-off coefficient k, and clear image are obtained as k value is more and images are more blurred as k value is smaller.

That is, Fig. 6 (1) shows that a blur is emphasized as a distance is far from $Z_n$, Fig.6 (2) shows that focus is adjusted at distance $Z_c$ and a more blur occurs as a distance is far from $Z_c$, Fig. 6(3) shows that focus is adjusted between $Z_{cn}$ and $Z_{cf}$ and a more blur occurs as a distance is far from the range, and Fig. 6 (4) shows that a most blur occurs between $Z_{cn}$ and $Z_{cf}$. It is possible to express different blurring effects depending on the way of blurring. In the programming, related formula to decide cut-off coefficient k as a function of distance Z may be introduced, and cut-off coefficient k may be read from Z value in a table fit for the characteristic.

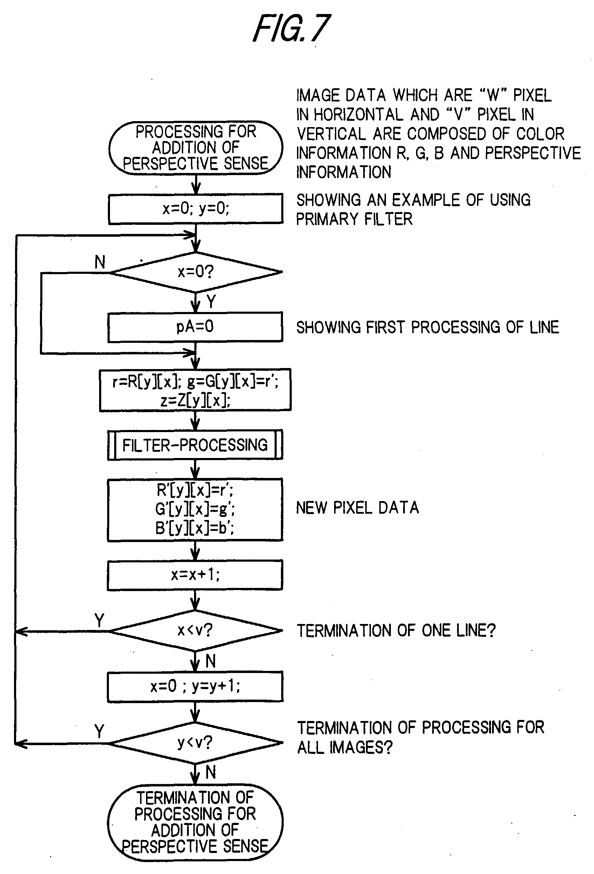

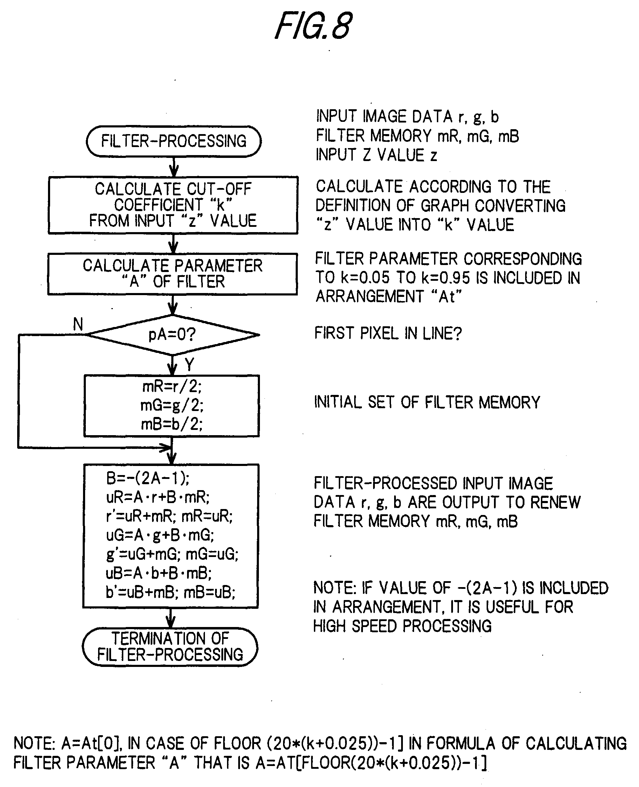

Figs. 7 and 8 are examples, which show blurring processing of the invention incase of using the first degree of filter. A position of pixel is represented by [y] [x] shown in Fig. 7. That is, [y] [x] shows a pixel in line y ("y+1"th to vertical direction) and row x ("x+1"th to horizontal direction) on displayed image. [0] [0] shows a pixel located on upper and left side of the displayed image because of the expression by C programming language. Where image data is represented by RGB (three primary colors of red, green and blue), pixel data of original image is represented as follows:

R [y] [x] · · · R image data of pixel located on (x+1) th of line (y+1) th
G [y] [x] · · · G image data of pixel located on (x+1)th of line (y+1) th
B [y] [x] · · · B image data of pixel located on (x+1)th of line (y+1) th

RGB value after a blurring processing is implemented is represented as follows:

R' [y] [x] · · · R image data of pixel located on (x+1)th of line (y+1) th
G' [y] [x] · · · G image data of pixel located on (x+1)th of line (y+1) th
B' [y] [x] · · · B image data of pixel located on (x+1)th of line (y+1) th

That is, in Fig. 7, the original pixel is blurred to obtain new pixel data r', g', b', which is introduced into R', G', B', and as a result, image data is represented as new pixel data. The blurring processing is carried out from 0 to v in line y and from 0 to w in row x per line y. That is, the blurring processing is done from left to right and from upper to lower of displayed image.

The filter processing in Fig. 7 is shown by a flow chart in Fig. 8. The processing for calculating the cut-off coefficient k from the Z value to be input can be obtained from the characteristic shown by the graph in Fig.6. The processing for obtaining the parameter A of the filter can be done by searching the value A from the k value on table which is made by calculating value $A_t$ corresponding to the value k, in advance. In the flow chart of Fig. 8, the value A is obtained by the formula,

$$A = A_t \text{ [floor (20 * (k + 0.025)) - 1]}$$

A relationship of k and A of the first degree of filter and example of arrangement $A_t$ are shown in Table 2. In Table 2, - (2A-1) is the value B in the flow chart of Fig. 8. If the value B is introduced into a table with the parameter A of filter, program processing runs faster.

[Table 2]

| | |
|---|---|
| k = 0.05 | A = 0.072960 · (2A-1) = 0.854081 |
| k = 0.10 | A = 0.136729 · (2A-1) = 0.726543 |
| k = 0.15 | A = 0.1936 · (2A-1) = 0.612801 |
| k = 0.20 | A = 0.245237 · (2A-1) = 0.509525 |
| k = 0.25 | A = 0.292893 · (2A-1) = 0.414214 |
| k = 0.30 | A = 0.33754 · (2A-1) = 0.32492 |
| k = 0.35 | A = 0.379961 · (2A-1) = 0.240079 |
| k = 0.40 | A = 0.420808 · (2A-1) = 0.158384 |
| k = 0.45 | A = 0.460649 · (2A-1) = 0.078702 |
| k = 0.50 | A = 0.5 · (2A-1) = 0 |
| k = 0.55 | A = 0.539351 · (2A-1) = 0.78702 |
| k = 0.60 | A = 0.579192 · (2A-1) = 0.158384 |
| k = 0.65 | A = 0.620039 · (2A-1) = 0.240079 |
| k = 0.70 | A = 0.66246 · (2A-1) = 0.32492 |
| k = 0.75 | A = 0.707107 · (2A-1) = 0.414214 |
| k = 0.80 | A = 0.754763 · (2A-1) = 0.509525 |
| k = 0.85 | A = 0.8064 · (2A-1) = 0.612801 |
| k = 0.90 | A = 0.863271 · (2A-1) = 0.726543 |

[Table 2] (continued)

| k = 0.95 | A = 0.92704 • (2A-1) = 0.854081 |
|---|---|
| $A_t$ ={0.072960, 0.136729, 0.1936, 0.245237, 0.292893, 0.33754, 0.379961, 0.420808, 0.460649, 0.5, 0.539351, 0.579192, 0.620039, 0.66246, 0.707107, 0.754763, 0.8064, 0.863271, 0.92704, 0.92704}: | |
| In this case, $A_t[0]$ to $A_t[19]$ is used as the arrangement $A_t$. | |

In Fig. 8, "pA = 0 ?" is a question to judge if the pixel is first one of each line. In Fig. 7, pA is 0 (pA = 0) if x is 0 (x = 0), and in the case, the first pixel of each line is represented by "pA=0". In other words, in case of the first pixel of each line, the filter memory is initialized as $mR = r/2$ ; $mG = g/2$ ; and $mB = b/2$ . According to conventional methods, the initial value of filter memory (filter memory value to first pixel of each line) is set to zero, whereby such problem that the first pixel in each line becomes dark when the k value is small occurs. The filter memory is initialized in the invention so that the first pixel in each line becomes a value of input pixel data r, g, b. The input pixel data r, g, b is initialized by using the original pixel data R, G, B in Fig. 7. According to the invention, the problem that the first pixel in each line becomes dark is removed. Further, while the filter processing for first pixel of each line is carried out plural times in conventional methods, it is carried out only one time in the invention to achieve high speed processing. It will be explained why the filter memory is initialized using x/2.

In the following calculation, x corresponds to r, g, b and y corresponds to r', g', b' in Figs. 3 and 4 and it should be noted that x and y are different from [x] and [y], respectively. When a filter memory is m, input of the filter is x, intermediate data of the filter is u, output of the filter is y and $A_1$ is A, the following formula is obtained.

$$u = A \cdot x - 2 (A - 1) \cdot m \qquad (10)$$

$$y = u + m = A \cdot x - 2 (A - 1) \cdot m$$

The m value by which initial output pixel data y is equal to the original pixel data x is calculated as $y = x$ and is represented by the formula,

$$m = x/2$$

Accordingly, the filter memory mR, mG, mB, as shown in Fig. 8, is represented by 1/2 of the original pixel data which is in no relationship with A.

In second degree of filter, when filter memory is $m_1$, $m_2$, input of the filter x, intermediate data of the filter is u and output of the filter y, the following formula is obtained.

$$u = C_0 \cdot x - A_1 \cdot m_1 - A_2 \cdot m_2$$

$$y = u + 2 m_1 + m_2 = C_0 \cdot x + (2 - A_1) \cdot m_1 + (1 - A_2) \cdot m_2$$

By replacement of $m_1$ and $m_2$ with m, them value calculated as $y = x$ in the same condition as the first degree of the filter processing is represented by the formula,

$$m=(1 - C_0) \cdot x/(3 - A_1 - A_2) = x/4 \text{(from Formula 1)}$$

That is, it is understand that a memory is set to one fourth of the original pixel value in case of second or more degree of filter processing.

Then, processing on boundaries of pixels in which cut-off coefficient k highly changes will be explained. Where the cut-off coefficient k highly changes between pixels, unnatural condition considerably appears because the boundaries of the pixels become much more clear. Therefore, the boundaries are processed in the invention as follows.

In the definition, a filter parameter before processing of pixel of the object is $A_1$ and a filter parameter designated in pixel of the object is $A_2$ when $m_1$ is a filter memory value of first degree and d is an output; output of pixel filter-processed in the filter parameter $A_1$ is $y_1$ and output of pixel filter-processed in the filter parameter $A_2$ is $y_2$. The marked change of k value means that values of $y_1$ and $y_2$ highly change.

Accordingly, in order to reduce the change, filter memory is rewritten so that output $y_t$ which is equal to the

mean of $y_1$ and $y_2$ is obtained. That is, a filter memory $m_1$ is converted to $m_t$ so that the following formula is realized.

$$y_t = (y_1 + y_2)/2$$

$$m_t = \{2 \cdot (A_1 + A_2 - 2) \cdot m_1 + (A_2 - A_1) \cdot d\}/\{4 \cdot (A_2 - 1)\}$$

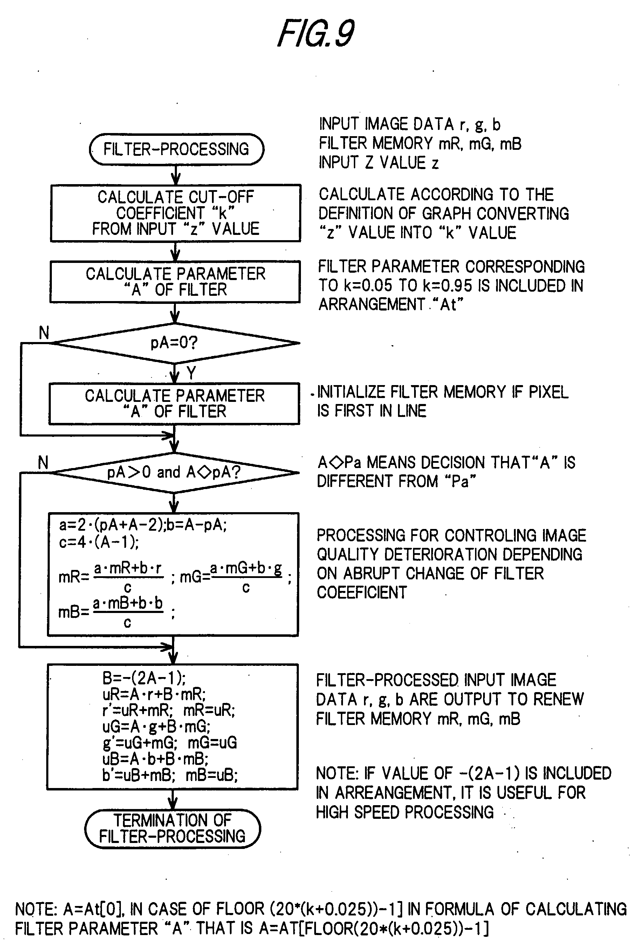

A flow chart in Fig. 9 is prepared by rewriting the flow chart in Fig. 8 based on the above formula. The filter parameter pA is rewritten in the last portion of the flow chart in Fig. 9 based on PA = A . That is, the judgment of "pA>0 and A◊pA?" indicates renewal of filter memory, where a pixel is not first one of line and filter parameter A of the pixel to be processed at the moment is different from filter parameter pA of the next pixel ahead.

A filter processing for second or more degree is carried out similar to the above the first degree of filter processing. For example, in the second degree of filter processing, filter memory value $m_t$ is rewritten by converting a filter memory $m_1$, $m_2$ to $m_t$ so that target output $y_t$ which is equal to the mean of $y_1$ and $y_2$ is shown by $y_t = (y_1 + y_2)/2$, where a filter memory value before processing of pixel of the object is $m_1$, $m_2$, output of pixel filter-processed in filter parameter $C_{01}$, $A_{11}$, $A_{21}$ before processing of pixel of the object is $y_1$; output of pixel filter-processed in the filter parameter $C_{02}$, $A_{12}$, $A_{22}$ of pixel of the object is $y_2$.

Thus obtained formula is shown by

$$m_t = \{(C_{01} - C_{02}) \cdot d + (4 - A_{11} - A_{12}) \cdot m_1 + (2 - A_{21} - A_{22}) \cdot m_2\} / \{2 \cdot (3 - A_{12} - A_{22})\}$$

An image pixel is explained by RGB format in the above, and R, G, B in the flow chart can be replaced by Y, U, V in case of YUV format. However, only Y component may be processed in the YUV format because processing of U and G components does not badly affect image quality. A frequency spectrum of the U and G components mainly exists in lower range than that of V component and therefore, they do not need frequency limitation by a filter. Accordingly, the filter processing in the YUV format can be done at a treble speed higher than that in the RGB format.

A burden of calculation necessary for one pixel to be output is always calculation volume for one pixel according to the filter means to generate a blur in the invention. For example, even if influence of ten pixels is expressed by the method of the invention, value of cut-off coefficient is changed but the calculation burden is not affected. Further, where the blurring effect is realized to either horizontal or vertical direction by the method of the invention, it is possible to omit an image memory for an intermediate output.

In the method of the invention, the blurring effect is achieved by one filtering processing regardless of its degree and is understandable from the sense point of view because its degree is set based on simulation of human's eyesight effects. It is supposed in the method of the invention that the eyesight is focused on the distance so long as the cut-off coefficient k is set to approximate 0.95 in the setting of z value table. By setting a threshold table of z value according to the method of the invention, a k value to realize a blur effect is set to a z value which represents a long distance, k = 0.95 is set to certain z value, and a k value can be set to realize a blurring effect to a z value of shorter distance than the above z value. As a result, it becomes easier to express the phenomenon that the image is blurred when human look at objects existing in very near distance.

There has been a problem that first pixel of each line processed by filtering becomes too dark when a cut-off coefficient k is small value. The reason is because the output value of the filtering processing is smaller than the actual value by clearing the filter memory to zero. The problem can be solved by setting the filter memory so that the output pixel value of the filtering processing may be same as the input pixel value. Namely, the problem that first pixel of each line processed by filtering becomes too dark can be solved by changing the memory value of the filter.

Further, there has been a problem that unnatural condition possibly occurs due to uniformly sharp boundaries of pixels where the cut-off coefficient k highly changes. The problem can be solved by rewriting the filter memory so that the output value before processing and the output after processing may be averaged to the pixels on the boundaries of which the k value is changed. As a result, images are smoothly burred and unnatural condition that the boundaries of pixels clearly comes out are removed.

## Claims

1. In a method for producing computer images having blur in accordance with perspective information by processing image data having the perspective information with digital low-pass filtering, the improvement which comprises, where first pixel of each line is processed, setting memory value of filter so that output value of the filter can be same as pixel value of input pixel data, followed by the filtering processing.

2. In a method for producing computer images having blur in accordance with perspective information by processing image data having the perspective information with digital low-pass filtering, the improvement which comprises, where cut-off coefficient k between pixels highly changes and unnatural condition possibly occurs in such the degree that the boundaries of the pixels become much clear, setting memory value of filter so that target output $y_t$ processed by filter parameter $A_2$ becomes $(y_1 + y_2)/2$, in which y1 is output to filter parameter $A_1$ before blur processing and y2 is output to filter parameter $A_2$ after the blur processing, whereby the boundaries become smooth.

3. In an apparatus for producing computer images having blur in accordance with perspective information by processing image data having the perspective information with digital low-pass filtering, the apparatus is provided with means which implements the filtering processing after setting memory value of filter so that output value of the filter can be same as pixel value of input pixel data, where first pixel of each line is processed.

4. In an apparatus for producing computer images having blur in accordance with perspective information by processing image data having the perspective information with digital low-pass filtering, the apparatus is provided with means capable of smoothening boundaries, where cut-off coefficient k between pixels highly changes and unnatural condition possibly occurs in such the degree that the boundaries of the pixels become much clear, setting memory value of filter so that target output $y_t$ processed by filter parameter $A_2$ becomes $(y_1 + y_2)/2$, in which y1 is output to filter parameter $A_1$ before blur processing and $y_2$ is output to filter parameter $A_2$ after the blur processing.

5. A computer recording medium to be used in a method for producing computer images having blur in accordance with perspective information by processing image data having the perspective information with digital low-pass filtering, in which the program is recorded, said program implementing a step of the filtering processing after setting memory value of filter so that output value of the filter can be same as pixel value of input pixel data, where first pixel of each line is processed.

6. A computer recording medium to be used in a method for producing computer images having blur in accordance with perspective information by processing image data having the perspective information with digital low-pass filtering, in which the program is recorded, said program implementing a step of smoothening boundaries by setting memory value of filter so that target output $y_t$ processed by filter parameter $A_2$ becomes $(y_1 + y_2)/2$, in which $y_1$ is output to filter parameter $A_1$ before blur processing and $y_2$ is output to filter parameter, where cut-off coefficient k between pixels highly changes and unnatural condition possibly occurs in such the degree that the boundaries of the pixels become much clear.

# FIG.1

ANALOG SIGNAL→ (INPUT) → BAND LIMITATION FILTER → ⌒─ A/D CONVERSION ─⌒ SAMPLING → QUANTIZATION → COMPUTER PROCESSING

ANALOG SIGNAL← (OUTPUT) ← CORRECTION FILTER ← D/A CONVERSION ← COMPUTER PROCESSING

# FIG.2

(1)

(2)

## FIG.3

## FIG.4

# FIG.5

k=0.2

k=0.4

k=0.6

k=0.8

# FIG.6

(1)
AS THE DISTANCE IS LONGER
FROM zn, THE BLUR IS MORE

(2)
AS THE DISTANCE IS FURTHER
FROM zc, THE BLUR IS MORE

(3)
AS THE DISTANCE IS FURTHER
FROM zcn AND zcf, THE BLUR
IS MORE

(4)
AS THE DISTANCE IS FURTHER
FROM zcn AND zcf, THE BLUR
IS LESS

# FIG.7

IMAGE DATA WHICH ARE "W" PIXEL IN HORIZONTAL AND "V" PIXEL IN VERTICAL ARE COMPOSED OF COLOR INFORMATION R, G, B AND PERSPECTIVE INFORMATION

PROCESSING FOR ADDITION OF PERSPECTIVE SENSE

x=0; y=0;

SHOWING AN EXAMPLE OF USING PRIMARY FILTER

x=0?

N

Y

pA=0

SHOWING FIRST PROCESSING OF LINE

r=R[y][x]; g=G[y][x]=r'; z=Z[y][x];

FILTER-PROCESSING

R'[y][x]=r'; G'[y][x]=g'; B'[y][x]=b';

NEW PIXEL DATA

x=x+1;

x<v?

Y

N

TERMINATION OF ONE LINE?

x=0 ; y=y+1;

y<v?

Y

N

TERMINATION OF PROCESSING FOR ALL IMAGES?

TERMINATION OF PROCESSING FOR ADDITION OF PERSPECTIVE SENSE

# FIG.8

```
┌─────────────────────────┐
│    FILTER-PROCESSING     │
└─────────────────────────┘
            │
            ▼
┌─────────────────────────┐      CALCULATE ACCORDING TO THE
│   CALCULATE CUT-OFF      │      DEFINITION OF GRAPH CONVERTING
│    COEFFICIENT "k"       │      "z" VALUE INTO "k" VALUE
│  FROM INPUT "z" VALUE    │
└─────────────────────────┘
            │
            ▼
┌─────────────────────────┐      FILTER PARAMETER CORRESPONDING
│  CALCULATE PARAMETER     │      TO k=0.05 TO k=0.95 IS INCLUDED IN
│     "A" OF FILTER        │      ARRANGEMENT "At"
└─────────────────────────┘
            │
   N        ▼
  ┌───<  pA=0?  >           FIRST PIXEL IN LINE?
  │         │ Y
  │         ▼
  │  ┌──────────────┐
  │  │   mR=r/2;    │       INITIAL SET OF FILTER MEMORY
  │  │   mG=g/2;    │
  │  │   mB=b/2;    │
  │  └──────────────┘
  │         │
  └─────────┤
            ▼
  ┌──────────────────┐      FILTER-PROCESSED INPUT IMAGE
  │   B=-(2A-1);     │      DATA r, g, b ARE OUTPUT TO RENEW
  │  uR=A·r+B·mR;    │      FILTER MEMORY mR, mG, mB
  │ r'=uR+mR; mR=uR; │
  │  uG=A·g+B·mG;    │
  │ g'=uG+mG; mG=uG; │
  │  uB=A·b+B·mB;    │
  │ b'=uB+mB; mB=uB; │
  └──────────────────┘
            │
            ▼
┌─────────────────────────┐      NOTE: IF VALUE OF -(2A-1) IS INCLUDED
│    TERMINATION OF        │      IN ARRANGEMENT, IT IS USEFUL FOR
│   FILTER-PROCESSING      │      HIGH SPEED PROCESSING
└─────────────────────────┘
```

INPUT IMAGE DATA r, g, b
FILTER MEMORY mR, mG, mB
INPUT Z VALUE z

NOTE: A=At[0], IN CASE OF FLOOR (20*(k+0.025))-1] IN FORMULA OF CALCULATING
FILTER PARAMETER "A" THAT IS A=AT[FLOOR(20*(k+0.025))-1]

# FIG.9

INPUT IMAGE DATA r, g, b
FILTER MEMORY mR, mG, mB
INPUT Z VALUE z

```
( FILTER-PROCESSING )
         │
         ▼
┌─────────────────────┐
│  CALCULATE CUT-OFF  │
│   COEFFICIENT "k"   │
│  FROM INPUT "z" VALUE│
└─────────────────────┘
```

CALCULATE ACCORDING TO THE
DEFINITION OF GRAPH CONVERTING
"z" VALUE INTO "k" VALUE

```
         │
         ▼
┌─────────────────────┐
│ CALCULATE PARAMETER │
│    "A" OF FILTER    │
└─────────────────────┘
```

FILTER PARAMETER CORRESPONDING
TO k=0.05 TO k=0.95 IS INCLUDED IN
ARRANGEMENT ."At"

```
  N      ◇ pA=0? ◇
         │ Y
         ▼
┌─────────────────────┐
│ CALCULATE PARAMETER │
│    "A" OF FILTER    │
└─────────────────────┘
```

- INITIALIZE FILTER MEMORY IF PIXEL
IS FIRST IN LINE

```
  N  ◇ pA>0 and A◇pA? ◇
         │
         ▼
```

A◇Pa MEANS DECISION THAT"A" IS
DIFFERENT FROM "Pa"

$a=2\cdot(pA+A-2); b=A-pA;$
$c=4\cdot(A-1);$

$mR=\dfrac{a\cdot mR+b\cdot r}{c}$ ; $mG=\dfrac{a\cdot mG+b\cdot g}{c}$ ;

$mB=\dfrac{a\cdot mB+b\cdot b}{c}$ ;

PROCESSING FOR CONTROLING IMAGE
QUALITY DETERIORATION DEPENDING
ON ABRUPT CHANGE OF FILTER
COEEFICIENT

$B=-(2A-1);$
$uR=A\cdot r+B\cdot mR;$
$r'=uR+mR;\ mR=uR;$
$uG=A\cdot g+B\cdot mG;$
$g'=uG+mG;\ mG=uG$
$uB=A\cdot b+B\cdot mB;$
$b'=uB+mB;\ mB=uB;$

FILTER-PROCESSED INPUT IMAGE
DATA r, g, b ARE OUTPUT TO RENEW
FILTER MEMORY mR, mG, mB

```
( TERMINATION OF )
( FILTER-PROCESSING )
```

NOTE: IF VALUE OF $-(2A-1)$ IS INCLUDED
IN ARREANGEMENT, IT IS USEFUL FOR
HIGH SPEED PROCESSING

NOTE: A=At[0], IN CASE OF FLOOR (20*(k+0.025))-1] IN FORMULA OF CALCULATING
FILTER PARAMETER "A" THAT IS A=AT[FLOOR(20*(k+0.025))-1]